# DEMANDE DE BREVET EUROPEEN

(11) **EP 2 851 848 A1**
(43) Date de publication de la demande: **25.03.2015**
(21) Numéro de dépôt: 13306275.2
(22) Date de dépôt: 18.09.2013
(51) Int. Cl.: G06K 19/077

(54) **Procédé et dispositif de fabrication de carte à puce, et carte à puce obtenue par ce procédé**

(71) Demandeur: Gemalto SA, 92190 Meudon (FR)
(72) Inventeur: Renouard, Jéremy, 92190 Meudon (FR); Cogno, Georges, 92190 Meudon (FR); Froger, Alexis, 92190 Meudon (FR); Jager, Thierry, 92190 Meudon (FR)
(74) Mandataire: Cour, Pierre

(57) **Abrégé**

La carte à puce selon l'invention est fabriquée par moulage par injection de matière plastique dans un moule comportant un ensemble de cisaillage comprenant un poinçon (41) et une matrice (42) coulissant respectivement dans les parois opposées (31, 32) du moule, selon une direction de coulissement orthogonale au plan général. On réalise un cisaillage au moins partiel de la carte dans les zones de liaison (40) entre un corps de carte d'un premier format (3) et un corps de carte (4) d'un deuxième format plus petit, en déplaçant simultanément la matrice et le poinçon, entre lesquels le corps de carte (4) est maintenu, dans un sens puis en sens inverse pour ramener le corps de carte (4) de deuxième format dans sa position initiale par rapport au corps de carte (3). Application notamment à la fabrication de carte à puce multiformats.

## Description

La présente invention concerne un nouveau procédé de fabrication de cartes à puce, en particulier destinées à une utilisation dans des téléphones portables. Elle concerne aussi un nouveau dispositif pour la mise en oeuvre du procédé, ainsi que une carte à puce obtenue par ce procédé.

Les cartes à puces concernées par l'invention sont en particulier des modules d'identification abonnés, dites cartes SIM. Les cartes SIM sont destinées à être incorporées au sein de téléphones portables. Les cartes SIM existent en plusieurs formats normalisés définis par des facteurs de forme 2FF, 3FF ou 4FF UICC (de l'anglais Universal Integrated Circuit Card).

La miniaturisation et l'augmentation des fonctionnalités des téléphones portables ont conduit à ce que le format des cartes SIM soit de plus en plus petit. Ainsi, on est passé du facteur de forme 2FF (25 x 15 mm) au 3FF (15 x 12 mm) puis au 4FF encore plus petit.

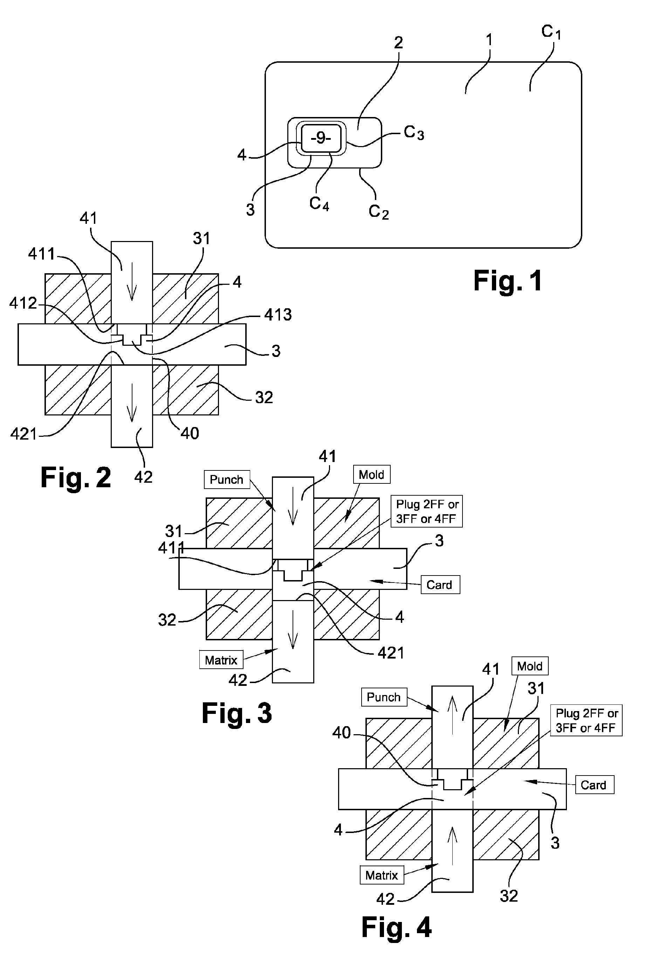

Typiquement, une carte SIM comporte, d'une part, un corps de carte, couramment réalisé par moulage par injection, et, d'autre part, une puce à circuit intégré, fixée sur ce corps de carte. Le corps de carte, se présente sensiblement sous la forme d'un parallélépipède rectangle d'épaisseur réduite. Généralement, pour la fabrication et la commercialisation des formats de carte 2FF, 3FF et 4FF, le corps de carte de plus petit format est englobé à l'intérieur d'un pourtour correspondant à un format plus grand, en général le format immédiatement supérieur. Ainsi, typiquement, une carte SIM peut être fabriquée et commercialisée sous un format 1FF, correspondant à un format carte de crédit, dont le corps englobe le corps d'une carte mini-SIM de format 2FF, lequel peut englober le corps d'une carte micro-SIM de format 3FF, etc. à la manière de la carte représentée figure 1, appelée alors carte multiformats. La puce est bien évidemment fixée sur la carte de plus petite dimension, dans un logement réalisé en creux dans l'épaisseur de la carte.

Pour utiliser la carte SIM, en tenant compte du format requis par l'appareil où la carte doit être insérée, l'utilisateur désolidarise la carte au format requis du corps de carte de dimension supérieure. Pour permettre cette désolidarisation de manière la plus aisée possible, le pourtour de chaque format est marqué par une ligne de prédécoupe, qui constitue un affaiblissement de la matière du corps de carte, apte à faciliter la séparation entre la carte de format désirée et le corps de carte de format supérieur, tout en assurant cependant un maintien suffisant entre lesdits corps de carte jusqu'à la séparation volontaire effectuée par l'utilisateur.

Une première manière de former les lignes de prédécoupe est de former une rainure traversant sur toute son épaisseur le corps de carte d'un plus grand format et délimitant le pourtour de la carte de format inférieur. Cette rainure débouchante est cependant discontinue de manière à laisser subsister des bretelles de liaison, typiquement au nombre de trois, assurant le maintien du corps de carte de petit format par rapport au corps de carte de dimension supérieure, et de plus l'épaisseur de ces bretelles est réduite, et elles comportent chacune une ligne de rupture visant à faciliter la séparation ultérieure de la carte de plus petite dimension, typiquement une mini-carte SIM, puisse être séparée du reste du corps de carte puis incorporée au sein de téléphones portables acceptant le format mini-carte.

Un procédé classique de réalisation de ces lignes de prédécoupe est le procédé par moulage, dans lequel la carte est moulée par injection et la cavité destinée au logement de la puce, les lignes de prédécoupe avec les bretelles de liaison et les lignes de rupture de ces bretelles, sont obtenues lors du moulage, par utilisation de moules comportant des noyaux mobiles, déplacés vers l'intérieur du moule juste après injection de la matière plastique dans le moule, et alors que la matière plastique n'est pas encore solidifiée. L'utilisation de tels noyaux permet d'obtenir directement lors du moulage des zones de matière de faible épaisseur tels que lesdites bretelles et leurs lignes de rupture. Ce procédé de fabrication permet de fabriquer les cartes à moindre coût, car il permet d'obtenir en une seule opération de moulage la périphérie de la carte Sim, le logement de la puce, les bretelles de liaison et les lignes de rupture.

Ce procédé est couramment utilisé pour la réalisation des lignes de prédécoupe par exemple entre les formats 1FFet 2FF, mais ne convient pas pour des petits formats, et encore moins pour des cartes multiformats, typiquement entre 3FF et 4FF, car les faibles distances entre les différentes lignes de prédécoupe ne permettent pas alors de former des lignes de prédécoupe à travers l'épaisseur totale de la carte, qui nécessitent une certaine largueur minimale de telles lignes. On a alors recours à d'autres procédés de réalisation de ces lignes de prédécoupe.

On connaît ainsi des cartes dans lesquelles les lignes de prédécoupe, ainsi que le logement de la puce, sont réalisées par usinage ou autre procédé par enlèvement de matière, au moyen d'outils adaptés tels que faisceau laser, jet haute pression, etc. Il est également connu de réaliser les lignes de prédécoupe par poinçonnage. Selon cette dernière technique, on utilise des outils comportant des lames tranchantes de forme correspondante à la forme du pourtour de la carte désirée, et on fait pénétrer ces lames dans le matériau de la carte, préalablement préparée par moulage sous forme d'une plaque de matière plastique ayant l'épaisseur finale de la carte, tout en laissant subsister, au moins dans certaines zones de la ligne de prédécoupe, une épaisseur de matière suffisante pour assurer le maintien de la carte dans le corps de carte de dimension supérieure, et suffisamment faible pour permettre une rupture de la matière dans les dites zones lors de la désolidarisation volontaire de la carte. Ce procédé permet d'obtenir une ligne de prédécoupe et des lignes de rupture beaucoup plus fines que le procédé par moulage. De plus, grâce à cette finesse des lignes de prédécoupe, il devient possible de replacer une carte SIM dans son logement après l'en avoir détachée en brisant les lignes de rupture, un maintien suffisant restant acquis par le seul effet du coincement de la carte dans son logement. Ce procédé est utilisé pour réaliser les lignes de prédécoupe des formats 3FF et 4FF dans des cartes multiformats combinant par exemple les formats 2FF/3FF/4FF.

Toutefois, ce procédé est coûteux, de l'ordre de trois fois plus que le procédé par moulage, car il nécessite notamment une opération de reprise de la carte, après la première opération de moulage, et l'utilisation d'outils précis pour assurer la précision des épaisseurs de matière subsistante après poinçonnage, qui sont de l'ordre de 100 micromètres.

De plus, que ce soit dans ce dernier cas, ou dans le cas de la fabrication par moulage, la rupture de la matière au niveau des lignes de ruptures ou de prédécoupe peut laisser subsister des arrachements de matière ou autres bavures qui sont préjudiciables à la facilité d'insertion ultérieure de la carte dans l'appareil qui doit la recevoir. La nécessité de laisser subsister des liaisons matérielles, sous forme de zones de matière résiduelle ou de membranes, pour assurer la liaison de la carte SIM avec le corps de carte de format supérieur, induit un effort nécessaire pour assurer la rupture de ces liaisons matérielles, avec un risque de détérioration de la puce placée sur la carte.

La discontinuité de la surface d'une carte de plus grande dimension, constituée par la présence des lignes de rupture du corps d'une carte de format inférieur, en particulier lorsqu'une rainure traversante détermine le contour de cette carte plus petite, peut créer des problèmes lors de l'insertion de la carte plus grande dans un dispositif, par accrochage ou blocage des contacts de ce dispositif dans les creux formés par les dites rainures ou lignes de rupture.

La présente invention a pour but de résoudre les problèmes évoqués ci-dessus, et vise en particulier à proposer des cartes, notamment des cartes multiformats, à un prix réduit. Elle vise en particulier à permettre une réalisation précise des lignes de prédécoupe, permettant de réaliser de telles lignes très proches les unes des autres, comme c'est le cas par exemple entre les formats 3FF et 4FF. Elle vise aussi à éviter les bavures pouvant subsister à la périphérie d'une carte après séparation de celle-ci d'un corps de carte de dimension supérieure. Elle vise aussi à simplifier la fabrication de telles cartes, en particulier en permettant la fabrication par moulage de la carte et la réalisation des lignes de rupture en une seule opération, donc de manière plus rapide et plus économique. Elle vise enfin à permettre la réalisation de cartes multifomats par moulage sans opération complémentaire de poinçonnage.

Avec ces objectifs en vue, l'invention a pour objet un procédé de fabrication d'une carte à puce comportant un corps de carte d'un premier format englobant un corps de carte d'un deuxième format plus petit que le premier format, coplanaire avec le corps de carte de premier format, le contour du corps de carte de deuxième format étant défini par une ligne de forme prédéterminée et le corps de carte de deuxième format étant lié au corps de carte de premier format en une pluralité de zones de liaison situées sur la dite ligne, procédé selon lequel la carte est fabriquée par moulage par injection de matière plastique.

Selon l'invention, le procédé est **caractérisé en ce que**, après le remplissage du moule et avant solidification de la matière plastique, on réalise un cisaillage au moins partiel de la carte dans lesdites zones de liaison, par un déplacement de l'ensemble du corps de carte de deuxième format par rapport au corps de carte de premier format selon une direction orthogonale au plan général de la carte, suivi d'un déplacement en sens inverse pour ramener le corps de carte de deuxième format dans sa position initiale, en particulier dans le même plan que le corps de carte de premier format.

L'invention permet donc de fabriquer des cartes à puces de différents formats et en particulier des cartes multiformats, par un procédé de moulage, sans étapes supplémentaires de poinçonnage.

Le moment où ledit cisaillage est effectué, dépend notamment de la nature de la matière plastique, de sa fluidité et donc de la température de la pièce.

Typiquement, le cisaillage est réalisé après que la température de la matière plastique injectée soit descendue en-dessous de la température de transition vitreuse de ladite matière plastique. Ainsi, les molécules de plastique au niveau de la ligne de cisaillage sont rompues mais sans cependant créer de décrochements ou autres discontinuités de surface au niveau de cette ligne. Au niveau de la ligne de cisaillage, le cisaillement réalisé à une température encore élevée est propre à former une interface, entre les chants de la carte de deuxième format et de la carte de premier format, qui s'étend orthogonalement au plan général de la carte. Au niveau de cette interface, il résulte, du fait notamment des différence de retrait matière lors du refroidissement de celle-ci, une sorte d'ajustement serré, apte à assurer le maintien de la carte de deuxième format dans la carte de premier format qui l'entoure, par le frottement résultant de cet ajustement serré, tout en permettant la dissociation ultérieure de la carte de deuxième format, avec une force d'extraction de la carte suffisante pour vaincre ledit frottement. Cette force peut être contrôlé par le choix du moment où le cisaillage est effectué, par l'amplitude du déplacement provoquant ce cisaillage, par la vitesse du déplacement et la pression exercée, et par les jeux entre le poinçon et la matrice utilisés pour effectuer ce cisaillage. Cette force peut ainsi être suffisamment faible pour éviter tout risque de destruction de la puce.

L'amplitude du déplacement de la carte de deuxième format par rapport à la carte de premier format est préférentiellement comprise entre 25 et 100 % de l'épaisseur de la carte, cette amplitude étant aussi dépendante de la nature et des propriétés de la matière plastique, et des autres paramètres de moulage, en particulier de la température lors de l'injection et des conditions de refroidissement.

Les dites zones de liaison peuvent être discontinues le long de la ligne définissant le contour de la carte de deuxième format, auquel cas des rainures débouchantes seront formées le long de cette ligne entre les dites zones de liaison.

Selon une disposition préférentielle, les dites zones de liaison s'étendent en continu sur tout le pourtour de la carte. La carte de plus petit format est alors maintenue dans la carte de plus grand format sur tout son pourtour, et il n'y a aucune discontinuité de surface au niveau de la ligne de séparation, sur toute la longueur de cette ligne.

L'invention a aussi pour objet un moule d'injection pour la fabrication d'une carte à puce selon le procédé mentionné précédemment, où le moule comporte un logement s'étendant dans un plan général et de dimensions correspondant aux dimensions de la carte de plus grand format à réaliser. Selon l'invention, le moule comporte au moins un ensemble de cisaillage comprenant un poinçon et une matrice coulissant respectivement dans les parois opposées du moule, selon une direction de coulissement orthogonale au plan général, une face frontale plane du poinçon et une face frontale plane de la matrice s'étendant parallèlement et ayant des dimensions identiques aux dimensions de la carte de plus petit format, et le moule comporte des moyens de commande du déplacement de la matrice et du poinçon agencés pour déplacer simultanément la matrice et le poinçon selon ladite direction de coulissement en conservant entre lesdites faces planes une distance constante, égale à l'épaisseur de la carte de plus petit format, et donc généralement égale à la distance entre les parois opposées du moule.

Selon une variante de réalisation, pour la réalisation de carte multiformats, le moule comporte plusieurs ensembles de matrice et poinçon associés, pouvant coulisser respectivement l'un dans l'autre. Ainsi, un premier ensemble comportant un poinçon et une matrice coulissants directement dans les parois du moule, peut être dédié à réaliser le cisaillage le long de la ligne correspondant au contour d'une carte de format 2FF et un deuxième ensemble, comportant un poinçon et une matrice coulissant respectivement dans le poinçon et la matrice du premier ensemble, dédié à réaliser le cisaillage le long de la ligne correspondant au contour d'une carte de format 3FF.

L'invention a aussi pour objet une carte à puce, obtenue par le procédé mentionné précédemment, comportant un corps de carte d'un premier format englobant un corps de carte d'un deuxième format plus petit que le premier format, coplanaire avec le corps de carte de premier format, le contour du corps de carte de deuxième format étant défini par une ligne de forme prédéterminée et le corps de carte de deuxième format étant lié au corps de carte de premier format en une pluralité de zones de liaison situées sur la dite ligne. La carte selon l'invention est caractérisée en ce qu'elle présente une interface, entre les chants de la carte de deuxième format et de la carte de premier format, qui s'étend orthogonalement au plan général de la carte, les dits chants étant lisses, sans les aspérités de rupture ou arrachements de matière qui subsiste nécessairement après désolidarisation des cartes fabriquées selon les méthodes antérieures, pour lesquelles il y a nécessairement rupture par arrachement au niveau des zones de jonction lors de la désolidarisation.

On notera encore que visuellement la carte selon l'invention présente une surface continue, sans relief, au niveau des lignes de prédécoupe.

Comme dans le cas des cartes obtenues par poinçonnage, il est possible de replacer une carte SIM selon l'invention dans son logement dans le corps de carte de format supérieur, après en avoir été extraite. Un avantage de l'invention est que dans un tel cas, la carte reste maintenue de manière similaire au maintien existant avant son extraction, en étant en contact par son chant avec le chant de son logement dans la carte de dimension supérieure, sur toute l'épaisseur de la carte. Comparativement, dans le cas des cartes poinçonnées, le contact obtenu après réinsertion de la carte n'est réalisé que sur la faible épaisseur des zones de prédécoupe subsistant entre les poinçons lors du poinçonnage, et donc avec une capacité de maintien nettement plus faible qu'avec la présente invention.

D'autres caractéristiques et avantages apparaîtront dans la description qui va être faite d'une carte conforme à l'invention, ainsi que du procédé et du dispositif de fabrication de cette carte.

On se reportera aux dessins annexés dans lesquels :
- la figure 1 est une vue d'une carte multiformats conforme à l'invention,
- les figures 2 à 4 illustrent de manière schématique le moule de fabrication et les phases successives du procédé, conformes à l'invention,
- la figure 5 est une vue de détail en section transversale de la zone de jonction dans une carte fabriquée par poinçonnage
- la figure 6 est une vue similaire comparative, dans le cas de la présente invention
- la figure 7 est une vue de principe en coupe de l'outillage mis en oeuvre pour réaliser une carte multiformats.

La carte représentée figure 1 est une carte à puce multiformats comportant un premier corps de carte 1 de plus grandes dimensions, au format carte de crédit 1FF, délimité par sa périphérie c1, et incorporant une carte SIM avec un corps de carte 2 de format 2FF ou mini-SIM, délimité par une ligne de prédécoupe c2. Ce corps de carte de format 2FF incorpore à son tour un corps de carte de format 3FF ou micro-SIM, délimité par une ligne de prédécoupe c3, qui incorpore à son tour un corps de carte de format 4FF ou nano-SIM, délimité par une ligne de prédécoupe c4, lequel porte le module électronique 9 placé dans un logement 21 en creux formé dans ce dernier corps de carte.

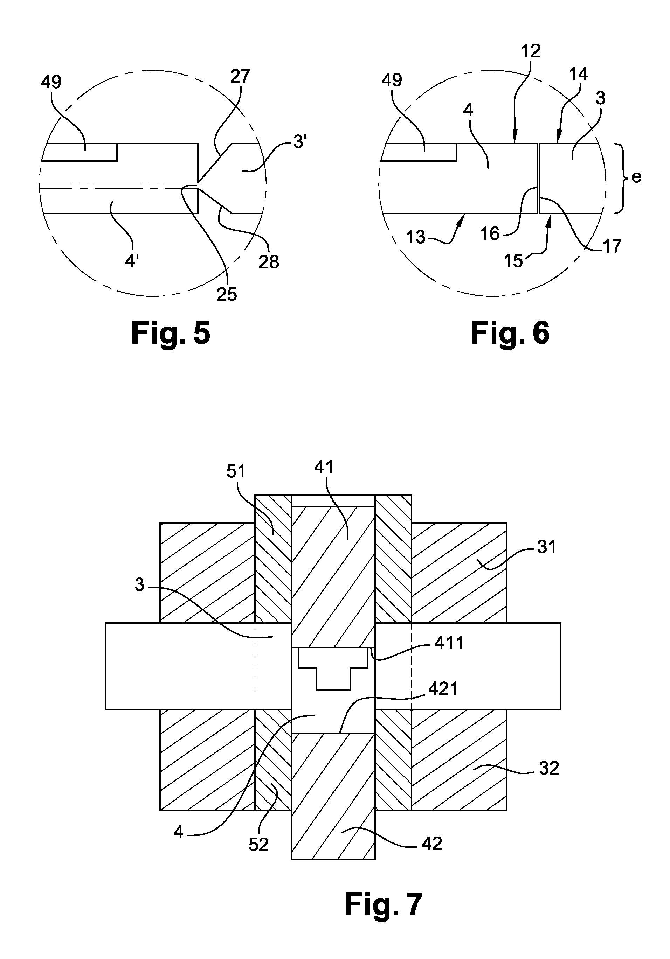

Les contours des différents corps de carte sont représentés par un tracé fin permettant de les délimiter, mais il doit être compris qu'il n'y a en fait pratiquement aucune discontinuité de surface de la carte entre la surface des différents corps de carte, comme on le voit sur le détail de la figure 6.

Sur cette figure 6, on a représenté à échelle agrandie et en section transversale, la zone de jonction entre le corps de carte 4 comportant le logement 49 du module électronique, et le corps de carte 3 de format supérieur. On voit que les surfaces 12, 13 des faces opposées du corps de carte 4 sont exactement coplanaires avec respectivement les surfaces 14, 15 du corps de carte 3. De plus, les chants 16, 17 se faisant face des deux corps de carte sont orthogonaux aux surfaces 14, 15, 16, 17 et uniformes, sans aspérités, s'étendant parallèlement l'un à l'autre. Les deux chants 16, 17 sont en conséquence en contact sur toute l'épaisseur « e » de la carte. Il est symboliquement représenté sur le dessin un faible jeu entre les deux chants mais il doit être compris que, comme déjà expliqué précédemment, il y a en fait au niveau de cette interface un ajustement de type serré, résultant du procédé de fabrication selon l'invention, dont la valeur est maitrisée avec la différence de retrait matière des deux corps de carte 3 et 4 et l'ajustage entre poinçon et matrice.

On a représenté à titre de comparaison, sur la figure 5, l'interface correspondant entre les corps de carte 3' et 4' d'une carte où les lignes de prédécoupe ont été réalisées par poinçonnage. On remarque aisément que dans ce cas, il y a au niveau de l'interface deux zones 27, 28 présentant un flanc incliné, résultant de la forme nécessairement en biseau des lames des outils de poinçonnage, et un lien 25 de matière plastique subsistant entre ces deux zones pour assurer la liaison entre les deux corps de carte 3' et 4' avant que, pour son utilisation dans un appareil, la carte au format 4FF ayant le corps de carte 4' soit désolidarisée du corps de carte 3' par rupture du lien 25.

Cette comparaison permet d'établir clairement les différences entre une carte conforme à l'invention, visible figure 6 et une carte obtenue par poinçonnage selon l'art antérieur, visible figure 5. On remarquera de plus les discontinuités de surface résultant de la présence des flancs inclinés dans le cas de la carte selon l'art antérieur, discontinuités absentes dans la carte selon l'invention. De plus encore, on comprendra aisément que, après séparation des corps de carte, le chant du corps de carte 4 sera quasi parfaitement lisse, alors que le chant du corps de carte 4' comportera une bavure ou des traces de l'arrachement de matière résultant de la rupture du lien 25.

Sur les figures 2 à 4, on a représenté schématiquement, et seulement pour sa partie concernée par l'invention, le moule conforme à l'invention, étant entendu que les autres partie du moule sont identiques aux moules d'injection selon la technique connue. Le moule comporte deux parois 31, 32 déterminant entre elles une chambre de dimensions correspondant au corps de carte de plus grand format, couramment au format 1FF.

Dans la description de cet exemple, il sera considéré par souci de simplification que l'on réalise un corps de carte SIM 4 dans un corps de carte 3 de format supérieur, étant entendu que cela peut s'appliquer autant à la formation d'un corps de format 4FF dans un corps 3FF, que d'un format 3FF dans un format 2FF, ou d'un format 4FF dans un format 2FF, etc ...

Le moule comporte un ensemble de cisaillage composé de deux éléments que l'on appellera poinçon 41 et matrice 42, étant entendu que, dans le cadre de la présente invention, il n'y a pas de déplacement relatif dudit poinçon 41 par rapport à ladite matrice 42, lors de l'étape de mise en oeuvre du procédé, mais, comme on le verra par la suite, uniquement un déplacement simultané du poinçon et de la matrice par rapport aux parois fixes 31, 32 du moule. Le logement 49 du module électronique peut être réalisé par utilisation d'un noyau indépendant, de manière connue en soi, un tel noyau étant alors, dans le cas de la présente invention, coulissant dans le poinçon 41. On pourra cependant, dans une étape spécifique précédant l'étape de mise en oeuvre du procédé selon l'invention, se servir du poinçon 41 comme noyau mobile pour former le logement 49 du module électronique. Dans ce cas, il y a un rapprochement entre poinçon et matrice lors cette étape préalable effectuée pendant le remplissage du moule ; mais ensuite, pour l'étape de cisaillage conforme à l'invention, le poinçon et la matrice se déplacent ensemble.

Dans l'exemple des figures 2 à 4, le poinçon 41 est monté coulissant dans la paroi de moule 31 et la matrice 42 est coulissante dans la paroi de moule 32. La face 421 de la matrice est plane, de forme correspondant à la forme du corps de carte 4. L'extrémité frontale 412 du poinçon comporte une surface plane 411 de forme extérieure correspondant également à la forme du corps de carte 4 et un bossage 413 servant de noyau mobile pour la réalisation du logement 49 comme expliqué ci-dessus. La pénétration du poinçon pour former le logement 49 peut être effectuée après injection de la matière plastique dans le moule.

La figure 2 représente le poinçon 41 et la matrice 42 dans la position acquise après cette étape préalable de pénétration du poinçon. Dans cette position, la face 421 de la matrice est sensiblement affleurante à la surface de la paroi inférieure 32 du moule et la surface 411 du poinçon est juste affleurante à la surface de la paroi supérieure 31.

Conformément à l'invention, à partir de cette position et juste après que la température de la matière plastique injectée soit passée en dessous de la température de transition vitreuse de la dite matière plastique, on fait coulisser simultanément la matrice 42 et le poinçon 41 par rapport aux parois du moule, comme illustré figure 3, puis on les ramène aussitôt dans leur position de départ, comme illustré figure 4. Pendant ces deux mouvements, la distance entre le poinçon et la matrice reste constante.

Ce mouvement de va et vient effectué alors que la température de la matière plastique contenue dans le moule est passée, en diminuant, sous la température de transition vitreuse, provoque une rupture, au moins partielle, des fibres de la matière plastique au niveau du contour 40 du corps de carte 4, agissant comme une cisaille mais sans désolidariser complètement le corps de carte 4 du corps de carte 3, et en ramenant en fin de mouvement le corps de carte 4 dans sa position initiale par rapport au corps de carte 3.

Dans l'exemple présenté, la course du déplacement de la matrice et du poinçon est d'environ le quart de l'épaisseur de la carte, mais elle peut être typiquement comprise entre 25 et 100 % de l'épaisseur du corps de carte.

A titre d'exemple, pour la fabrication d'une carte en ABS (acrylonitrile butadiène styrène), le cisaillage est effectué à une température de la matière plastique de l'ordre de 80 à 150°C et la course commune du poinçon et de la matrice est d'environ la moitié de l'épaisseur de la carte, soit environ 400 micromètres.

La figure 7 illustre la mise en oeuvre du procédé selon l'invention dans le cas de la réalisation d'une carte à deux formats. Le moule comporte dans ce cas deux ensembles de cisaillage coaxiaux coulissants l'un dans l'autre, à savoir un premier ensemble similaire à celui décrit dans l'exemple précédent, apte à former la ligne de découpe d'une carte de plus petit format, par exemple 4FF, ainsi que le logement de la puce, et ce premier ensemble étant monté coulissant dans un deuxième ensemble comportant une matrice tubulaire 52 et un poinçon tubulaire 51, de dimensions extérieures correspondant aux dimensions du corps de carte de format supérieur, par exemple 3FF, et coulissant dans les parois 31, 32 du moule. En déplaçant successivement, ou simultanément mais en sens opposés ou avec des courses différentes, chacun de ces ensembles, on réalise l'opération de cisaillage conforme à l'invention à la fois pour la découpe du format 4FF et du format 3FF.

Bien sûr, ce qui vient d'être décrit est transposable aux autres formats ou autres combinaison de formats de carte.

Bien que, dans les exemples précédents, il ait été indiqué que les surfaces des poinçons et matrices soient coplanaires avec les surfaces des parois du moule, ce qui est le cas quand les différents corps de carte ont la même épaisseur, on pourrait bien sûr obtenir une carte conforme à l'invention dans laquelle les épaisseurs des différents formats seraient différentes, auquel cas les surfaces en questions ne seraient pas coplanaires, mais le principe de l'invention restant le même comme cela sera aisément compris par l'homme de métier.

## Revendications

1. Procédé de fabrication d'une carte à puce comportant un corps de carte (3) d'un premier format englobant un corps de carte (4) d'un deuxième format plus petit que le premier format, le contour (c4, c3 ...) du corps de carte de deuxième format étant défini par une ligne de forme prédéterminée et le corps de carte de deuxième format étant lié au corps de carte de premier format en une pluralité de zones de liaison situées sur la dite ligne, procédé selon lequel la carte est fabriquée par moulage par injection de matière plastique,
**caractérisé en ce que**, après le remplissage du moule d'injection et avant solidification de la matière plastique, on réalise un cisaillage au moins partiel de la carte dans lesdites zones de liaison (40), par un déplacement de l'ensemble du corps de carte (3) de deuxième format par rapport au corps de carte (4) de premier format selon une direction orthogonale au plan général de la carte, suivi d'un déplacement en sens inverse pour ramener le corps de carte de deuxième format dans sa position initiale.

2. Procédé selon la revendication 1, **caractérisé en ce que** le cisaillage est réalisé après que la température de la matière plastique injectée soit descendue en-dessous de la température de transition vitreuse de ladite matière plastique.

3. Procédé selon l'une quelconque des revendications précédentes, **caractérisé en ce que** l'amplitude du déplacement de la carte de deuxième format par rapport à la carte de premier format est comprise entre 25 et 100 % de l'épaisseur de la carte

4. Procédé selon l'une quelconque des revendications précédentes, **caractérisé en ce que** les dites zones de liaison s'étendent en continu sur tout le pourtour de la carte de deuxième format.

5. Moule d'injection pour la fabrication d'une carte à puce, le moule comportant un logement s'étendant dans un plan général et de dimensions correspondant aux dimensions de la carte de plus grand format à réaliser, **caractérisé en ce que** le moule comporte au moins un ensemble de cisaillage comprenant un poinçon (41) et une matrice (42) coulissant respectivement dans les parois opposées (31, 32) du moule, selon une direction de coulissement orthogonale au plan général, une face frontale plane (411) du poinçon et une face frontale plane (421) de la matrice s'étendant parallèlement et ayant des dimensions identiques aux dimensions d'une carte de plus petit format, et le moule comporte des moyens de commande du déplacement de la matrice et du poinçon agencés pour déplacer simultanément la matrice et le poinçon selon ladite direction de coulissement en conservant entre lesdites faces frontales planes une distance constante, égale à l'épaisseur de la carte de plus petit format.

6. Moule d'injection selon la revendication 5, **caractérisé en ce qu'il** comporte plusieurs ensembles (41, 42 ; 51, 52) de matrice et poinçon associés, pouvant coulisser respectivement l'un dans l'autre.

7. Carte à puce comportant un corps de carte (4) d'un premier format englobant un corps de carte (3) d'un deuxième format plus petit que le premier format, le contour (c3, c4) du corps de carte de deuxième format étant défini par une ligne de forme prédéterminée et le corps de carte de deuxième format étant lié au corps de carte de premier format en une pluralité de zones de liaison situées sur la dite ligne, **caractérisée en ce qu'**elle présente une interface, entre les chants (16, 17) de la carte de deuxième format et de la carte de premier format, dans les dites zones de liaison, qui s'étend orthogonalement au plan général de la carte, les dits chants étant lisses, sans aspérités de rupture ou arrachements de matière.

8. Carte à puce selon la revendication 7, **caractérisée en ce qu'**elle présente une surface continue, sans relief, au niveau des lignes de prédécoupe.

9. Carte à puce selon la revendication 7, **caractérisée en ce qu'**elle est réalisée en matière plastique, en particulier en ABS.
